# EUROPÄISCHE PATENTSCHRIFT

(11) **EP 2 821 755 B1**
(45) Veröffentlichungstag und Bekanntmachung des Hinweises auf die Patenterteilung: **12.06.2019**
(21) Anmeldenummer: 14166413.6
(22) Anmeldetag: 29.04.2014
(51) Int. Cl.: G01D 11/24, H01R 13/58, H01R 35/04

(54) **Abtasteinheit zur Abtastung eines Maßstabs und Positionsmesseinrichtung**
Scanning unit for scanning a scale and position measuring device
Unité de balayage destinée au balayage d'une tige de mesure et dispositif de mesure de position

(30) Priorität: 03.07.2013 DE 102013213003
(43) Veröffentlichungstag der Anmeldung: 07.01.2015
(73) Patentinhaber: Dr. Johannes Heidenhain GmbH, 83301 Traunreut (DE)
(72) Erfinder: Riesemann, Bernhard, 83373 Taching (DE); Pucher, Wolfgang, 83278 Traunstein/Rettenbach (DE); Kühnhauser, Stefan, 83373 Taching (DE)

(56) Entgegenhaltungen:
- EP-A1- 0 818 854
- EP-A2- 2 068 125
- DE-A1- 4 034 425
- DE-A1- 19 918 652
- DE-U1- 9 103 155

## Beschreibung

### GEBIET DER TECHNIK

Die Erfindung betrifft eine Abtasteinheit zur Abtastung eines Maßstabs gemäß dem Oberbegriff des Anspruchs 1 sowie eine Positionsmesseinrichtung mit einer derart ausgebildeten Abtasteinheit.

Derartige Abtasteinheiten und Positionsmesseinrichtungen werden beispielsweise bei Werkzeugmaschinen und vermehrt auch in der Halbleiterindustrie zur Messung von Wegen, Winkeln und Geschwindigkeiten eingesetzt. Hierzu wird zunehmend ein platzsparender Aufbau der Abtasteinheit bzw. der Positionsmesseinrichtung gefordert.

### STAND DER TECHNIK

Aus der EP 2 068 125 A2 ist eine derartige Abtasteinheit bzw. Positionsmesseinrichtung bekannt. Die Positionsmesseinrichtung besteht aus zwei eigenständig handhabbaren Baueinheiten, nämlich einer Abtasteinheit und einem Maßstab. Zur Positionsmessung in einer Messrichtung X ist die Abtasteinheit in dieser Messrichtung X relativ zum Maßstab verfahrbar, wozu der Maßstab in Messrichtung X verläuft.

Die Abtasteinheit enthält einen Detektor zur Erzeugung von positionsabhängigen elektrischen Abtastsignalen bei der Abtastung des in Messrichtung X verlaufenden Maßstabs. Um die Abtastsignale nach außen zu führen, ist eine elektrische Leitung durch das Gehäuse der Abtasteinheit geführt.

Wie die Figur 1 der EP 2 068 125 A2 zeigt, sind bei dieser Abtasteinheit mehrere Außenflächen als mögliche Anbauflächen ausgestaltet, indem diese Außenflächen Befestigungsbohrungen aufweisen. Eine Richtungsanpassung des Kabels an die momentane Anbausituation ist durch Biegung des Kabels möglich. Der zulässige Biegeradius des Kabels ist aber relativ groß und durch die Biegung werden Kräfte auf die Abtasteinheit eingeleitet, welche die Messgenauigkeit der Positionsmesseinrichtung nachteilig beeinflussen. Durch Wahl eines kleinen Biegeradius kann darüber hinaus das Kabel bzw. können die darin verlaufenden Litzen beschädigt werden.

Dieses Problem versucht die JP 04-198714 A1 damit zu lösen, indem an mehreren rechtwinkelig zueinander ausgerichteten Außenflächen der Abtasteinheit jeweils eine Buchse zum Anstecken eines Kabels vorgesehen ist. Damit kann die Richtung des Kabelabgangs durch Umstecken variabel an die vorliegende Anbausituation angepasst werden.

Nachteilig dabei ist aber, dass durch das Vorsehen mehrerer Buchsen am Gehäuse der Abtasteinheit der Aufwand zur sicheren Abdichtung erheblich steigt. Darüber hinaus ist zur Herstellung einer sicheren Steckverbindung am Gehäuse ein relativ großer Gegenstecker erforderlich.

Aufgabe der Erfindung ist es daher, eine Abtasteinheit bzw. eine Positionsmesseinrichtung anzugeben, die derart ausgebildet ist, dass eine einfache und platzsparende Anpassung an die vorliegende Anbausituation ermöglicht wird und in jeder Anbausituation eine genaue Positionsmessung gewährleistet ist.

Gelöst wird diese Aufgabe durch eine Abtasteinheit mit den Merkmalen des Anspruchs 1 und mit einer Positionsmesseinrichtung mit den Merkmalen des Anspruchs 12.

Vorteilhafte Ausgestaltungen sind in den abhängigen Ansprüchen angegeben.

### ZUSAMMENFASSUNG DER ERFINDUNG

Die erfindungsgemäß ausgestaltete Abtasteinheit ist zur Abtastung eines Maßstabes zur Positionsmessung in einer Messrichtung ausgestaltet.

Die Abtasteinheit umfasst ein Gehäuse mit einem Detektor zur Erzeugung von positionsabhängigen Abtastsignalen bei der Abtastung des Maßstabes in Messrichtung. Der Detektor ist im Innenraum des Gehäuses untergebracht und wird vom Gehäuse umschlossen.

Zur Stromversorgung der Abtasteinheit und / oder zum Herausführen der positionsabhängigen Abtastsignale weist die Abtasteinheit eine elektrische Leitung auf, welche durch das Gehäuse in Messrichtung verlaufend nach außen geführt ist. Diese elektrische Leitung ist in einem Drehkörper geführt, der einen ersten Abschnitt aufweist, der in Messrichtung verläuft und einen zweiten Abschnitt aufweist, der in einer zweiten Richtung verläuft, die gegenüber der Messrichtung abgewinkelt verläuft. Der Drehkörper ist um eine Drehachse am Gehäuse drehbar gelagert ist, die ebenfalls in Messrichtung verläuft.

In vorteilhafter Weise ist der zweite Abschnitt des Drehkörpers gegenüber dem ersten Abschnitt um 90° abgewinkelt, was eine besonders platzsparende Leitungsführung ermöglicht.

Die Abtasteinheit ist vorzugsweise als eigenständige Baueinheit ausgebildet, die dem abzutastenden Maßstab zuordenbar ist.

Der Maßstab und die Abtasteinheit bilden dabei gemeinsam die Positionsmesseinrichtung, die vorzugswiese als Längenmesseinrichtung mit einem linear verlaufenden Maßstab ausgebildet ist.

Die Abtasteinheit kann dabei aber auch einem Maßstab zugeordnet werden, der gekrümmt verläuft. Der Maßstab kann ein am Außen- oder Innenumfang eines Trägers aufgebrachtes, z.B. gespantes bzw. geklebtes Band sein. Der Maßstab und die Abtasteinheit bilden in diesem Fall eine Winkelmesseinrichtung. Die Messrichtung ist bei dieser Positionsmesseinrichtung definiert durch die Umfangsrichtung bzw. die Tangente am Abtastort des Maßstabes.

Die Abtasteinheit ist vorzugsweise mit einer Drehbegrenzung versehen, welche den möglichen Drehwinkel des Drehkörpers gegenüber dem Gehäuse beschränkt. Vorzugsweise begrenzt die Drehbegrenzung die Drehbarkeit des Drehkörpers derart, dass der zweite Abschnitt des Drehkörpers ausschließlich in Drehlagen gebracht werden kann, die innerhalb eines Schwenkbereiches von ± 100° zur Senkrechten der Oberfläche des abzutastenden Maßstabs liegen.

Das Gehäuse weist in vorteilhafter Weise zumindest eine parallel zur Messrichtung verlaufende Außenfläche auf, die zum Anbau an ein zu messendes Objekt ausgestaltet ist. Diese Ausgestaltung der zumindest einen Außenfläche des Gehäuses als Anbaufläche zum Anbau an ein zu messendes Objekt erfolgt insbesondere dadurch, dass senkrecht zu dieser Anbaufläche verlaufende Befestigungsbohrungen darin eingebracht sind. Diese Befestigungsbohrungen können Durchgangsbohrungen oder Sacklochbohrungen sein und mit einem Innengewinde versehen sein.

Die zumindest eine zum Anbau ausgestaltete Anbaufläche des Gehäuses ist vorzugsweise als ebene Fläche ausgebildet, die aufgespannt wird durch die Messrichtung und eine Senkrechte zur abzutastenden Maßstaboberfläche
Insbesondere sind zwei parallel zueinander und gegenüber liegende Außenflächen des Gehäuses als Anbauflächen ausgebildet, so dass der zweite Abschnitt des Drehkörpers durch Drehen um die Drehachse in zumindest zwei Drehlagen gebracht werden kann, wobei er in der ersten Drehlage von einer dieser zwei Anbauflächen in einem rechten Winkel weg weist und in der zweiten Drehlage von der anderen der beiden Anbauflächen in einem rechten Winkel weg weist.

Eine besonders vorteilhafte Ausgestaltung der Abtasteinheit ergibt sich, wenn die Außenkontur des Gehäuses quaderförmig ist. Dadurch werden mehrere in Messrichtung verlaufende Außenflächen geschaffen, die wahlweise als Anbauflächen genutzt werden können.

Zur axialen Sicherung des Drehkörpers am Gehäuse ist zwischen dem Gehäuse und dem Drehkörper eine Auszugsicherung vorgesehen. Diese axial wirkende Auszugsicherung istin Form von im Gehäuse senkrecht zur Drehachse des Drehkörpers verlaufenden Stiften ausgeführt, die mit einer umlaufenden Nut im Drehkörper korrespondieren. Diese Stifte sind vorzugsweise Spannstifte.

Der Drehkörper ist mittels eines Sperrelementes in einer eingestellten Drehlage am Gehäuse arretierbar. Somit kann der Anwender die gewünschte Ausgangsrichtung der Leitung der aktuellen Anbaulage optimal anpassen und den Drehkörper in dieser Drehlage am Gehäuse fixieren. Zur Fixierung der Drehlage ist eine Schraube, beispielsweise eine Madenschraube, von außen betätigbar ins Gehäuse einschraubbar. Besonders vorteilhaft ist es, wenn die Schraube von der Außenfläche des Gehäuses aus betätigbar ist, die der Außenfläche mit dem Abtastfenster parallel gegenüberliegend angeordnet ist. Der Innenraum des Gehäuses ist gegenüber dem Außenraum mittels einer umlaufenden Dichtung abgedichtet. Hierzu weist der am Gehäuse drehbar gelagerte erste Abschnitt des Drehkörpers eine runde Außenkontur auf, die mittels eines Dichtringes, insbesondere eines O-Ringes gegenüber einer runden Innenkontur des Gehäuses abgedichtet ist.

Zur Aufnahme des Dichtringes weist das Gehäuse und / oder der erste Abschnitt des Drehkörpers eine Ringnut auf.

Der Dichtring ist bezüglich des von außen betätigbaren Sperrelementes - z.B. als Madenschraube ausgeführt - Gehäuse-innenraumseitig angeordnet.

Die zum Ende des zweiten Abschnitts des Drehkörpers geführten Leitungen können dort an eine Steckverbindung angeschlossen werden. Besonders platzsparend ist aber, wenn ein Kabel mit dem zweiten Abschnitt des Drehkörpers verbunden ist, und dass die im Drehkörper geführten Leitungen Litzen dieses Kabels sind. Bei dieser Ausgestaltung ist der Drehkörper insbesondere über eine Crimphülse mit einem Schirm des Kabels elektrisch leitend verbunden, und diese Crimphülse umschließt einen Mantel dieses Kabels. Dadurch fixiert die Crimphülse das Kabel am Drehkörper. Eine Fixierung bzw. Festlegung durch eine umlaufende Klemmung des Kabels an dem Drehkörper mittels der Crimphülse gewährleistet auch eine gegenseitige Abdichtung zwischen dem Kabel und dem Drehkörper.

### KURZE BESCHREIBUNG DER ZEICHNUNGEN

Es zeigt
- Figur 1: eine perspektivische Darstellung einer Positionsmesseinrichtung gemäß der Erfindung;
- Figur 2: einen Querschnitt A - A der Positionsmesseinrichtung gemäß Figur 1 in einer ersten Drehlage des Drehkörpers;
- Figur 3: einen Querschnitt A - A der Positionsmesseinrichtung gemäß Figur 1 in einer zweiten Drehlage des Drehkörpers;
- Figur 4: eine weitere Ansicht der Abtasteinheit der Positionsmesseinrichtung gemäß Figur 1;
- Figur 5: einen Teilschnitt C - C durch die Abtasteinheit gemäß Figur 2;
- Figur 6: einen Teilschnitt B - B durch die Abtasteinheit gemäß Figur 2, und
- Figur 7: einen Teilschnitt D - D durch die Abtasteinheit der Positionsmesseinrichtung gemäß Figur 1.

### BESCHREIBUNG DER AUSFÜHRUNGSFORMEN

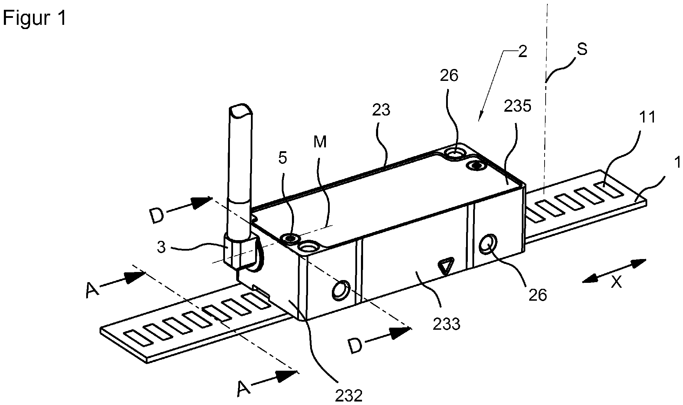

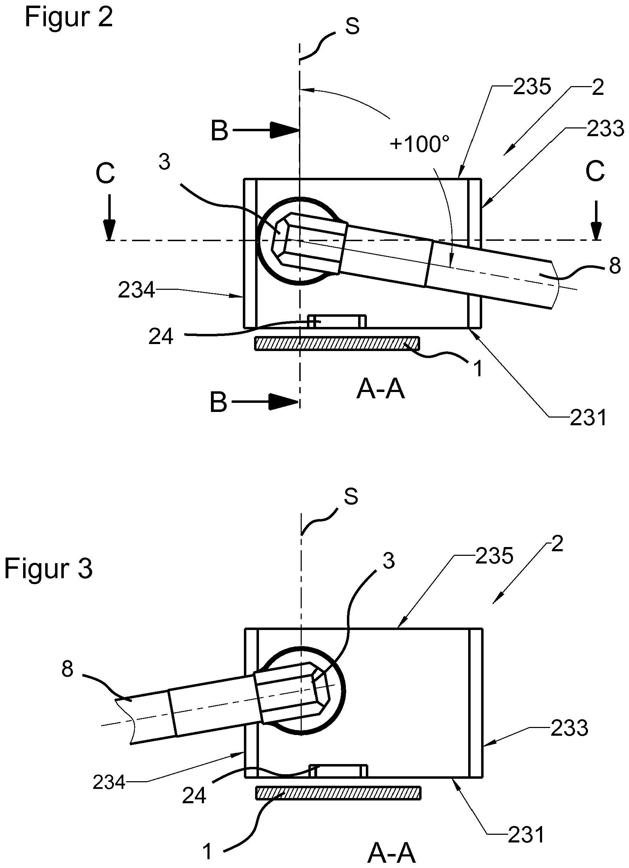

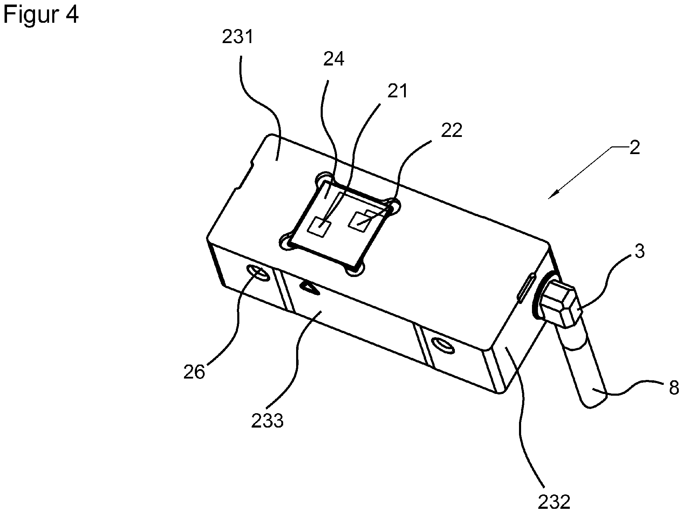

Die Erfindung ist in den Figuren 1 bis 7 am Beispiel einer Längenmesseinrichtung als Positionsmesseinrichtung dargestellt und wird nachfolgend im Detail beschrieben. Diese Längenmesseinrichtung umfasst einen Maßstab 1 und eine als eigenständige Baueinheit diesem Maßstab 1 zuordenbare Abtasteinheit 2. Der Maßstab 1 weist eine Messteilung 11 auf, die von der Abtasteinheit 2 lichtelektrisch abtastbar ist. Die Messteilung 11 ist im Beispiel als reflektierende Inkrementalteilung ausgebildet. Der Maßstab 1 verläuft in Messrichtung X und die Abtasteinheit 2 ist in dieser Messrichtung X relativ zum Maßstab 1 verschiebbar. Zur Positionsmessung umfasst die Abtasteinheit 2 eine Lichtquelle 21 und einen Detektor 22. Bei der Positionsmessung wird ein von der Lichtquelle 21 ausgehendes Lichtbündel von der Messteilung 11 positionsabhängig moduliert. Das positionsabhängig modulierte Lichtbündel wird von dem Detektor 22 erfasst, der daraufhin positionsabhängige elektrische Abtastsignale erzeugt.

Die Abtasteinheit 2 umfasst ein Gehäuse 23, welches die Lichtquelle 21 und den Detektor 22 umschließt. Die Außenkontur des Gehäuses 23 ist quaderförmig. Eine der so gebildeten Außenflächen 231 weist ein Abtastfenster 24 auf, das dem Maßstab 1 gegenüberliegend angeordnet ist. Das Abtastfenster 24 ist für den Abtaststrahlengang durchlässig, schließt das Gehäuse 23 aber gegen Verschmutzungen ab. Das Abtastfenster 24 ist beispielsweise aus Glas. In einer weiteren dazu senkrecht verlaufenden Außenflächen 232 ist eine Öffnung vorgesehen, durch die elektrische Leitungen 25 vom Innenraum des Gehäuses 23 nach außen geführt sind. Über diese elektrischen Leitungen 25 können die elektrischen Abtastsignale des Detektors 22 nach außen geführt werden und / oder es kann eine Versorgungsspannung der Abtasteinheit 2 zugeführt werden.

Die elektrischen Leitungen 25 sind in einem Drehkörper 3 geführt. Dieser Drehkörper 3 weist einen ersten rohrförmigen Abschnitt 31 auf, der geradlinig in Messrichtung X verläuft. Dieser erste Abschnitt 31 ist weiterhin in der Öffnung des Gehäuses 23 drehbar gelagert, wobei die Drehachse M in Messrichtung X verlaufend ausgerichtet ist. Im weiteren Verlauf weist der Drehkörper 3 einen zweiten Abschnitt 32 auf, der gegenüber dem ersten Abschnitt 31 abgewinkelt ist, in vorteilhafter Weise um 90° abgewinkelt ist.

Durch das Vorsehen der Lagerung des Drehkörpers 3 direkt in einer Gehäusewand der Abtasteinheit 2 ist eine platzsparende Anordnung des Drehkörpers 3 möglich. Die Maßnahme, dass der erste Abschnitt 31 des Drehkörpers 3 in Messrichtung X verläuft, hat den Vorteil, dass der für die Verschiebung der Abtasteinheit 2 zur Verfügung stehende Raum über dem Maßstab 1 optimal genutzt wird.

Die Abwinkelung des zweiten Abschnitts 32 des Drehkörpers 3 gegenüber dem ersten Abschnitt 31 hat in Verbindung mit der Drehbarkeit den besonderen Vorteil, dass die Richtung des zweiten Abschnitts 32 und somit der weitere Verlauf der elektrischen Leitungen 25 der Anbausituation der Abtasteinheit 2 optimal angepasst werden kann, ohne dass Biegekräfte auf die Abtasteinheit 2 ausgeübt werden. Die Abwinkelung des zweiten Abschnitts 32 gegenüber dem ersten Abschnitt 31 um 90° ist besonders vorteilhaft, da für die Leitungsführung wenig Platz verbraucht wird und die elektrischen Leitungen 25 auf dem kürzesten Weg von der Abtasteinheit 2 weg geführt werden können.

Das quaderförmige Gehäuse 23 der Abtasteinheit 2 weist eine erste parallel zur Messrichtung X verlaufende Außenfläche 233, ausgebildet als Anbaufläche auf, über welche die Abtasteinheit 2 an ein zu messendes Objekt - beispielsweise eine Linearachse einer Maschine - anbaubar ist. Hierzu sind in dieser Außenfläche 233 senkrecht zu seiner Oberfläche verlaufende Befestigungsbohrungen 26 eingebracht. Diese erste Außenfläche 233 verläuft rechtwinkelig zu der Außenfläche 231, welche das Abtastfenster 24 aufweist. Die beiden Außenflächen 233 und 234 sind ebene Flächen, die jeweils aufgespannt werden durch die Messrichtung X und eine Senkrechte S zur Außenfläche 231 bzw. zur abzutastenden Maßstaboberfläche am Abtastort.

Am Gehäuse 23 ist eine weitere parallel zur Messrichtung X und parallel zur ersten Außenfläche 233 verlaufende Außenfläche 234 als zweite Anbaufläche ausgebildet. Die erste Außenfläche 233 und die zweite Außenfläche 234 stehen dem Anwender wahlweise zum Anbau der Abtasteinheit 2 an ein zu messendes Objekt zur Verfügung. Um hierfür den Verlauf der elektrischen Leitungen 25 jeweils platzsparend wählen zu können, ist der zweite Abschnitt 32 des Drehkörpers 3 durch Drehen um die Drehachse M in zumindest zwei Drehlagen bringbar. In der ersten Drehlage weist dabei der zweite Abschnitt 32 des Drehkörpers 3 in einem rechten Winkel von der ersten Außenfläche 233 weg und in der zweiten Drehlage weist der zweite Abschnitt 32 des Drehkörpers 3 in einem rechten Winkel von der zweiten Außenfläche 234 weg.

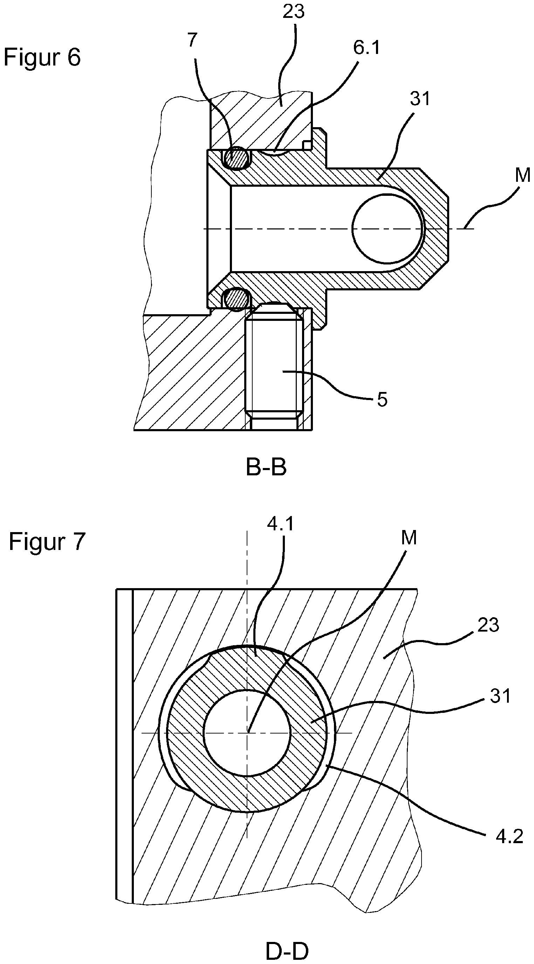

Der Drehwinkel des Drehkörpers 3 ist mittels einer Drehbegrenzung 4 eingeschränkt. Eine beispielhafte Ausgestaltung dieser Drehbegrenzung 4 ist in Figur 7 dargestellt und mit den Bezugszeichen 4.1 und 4.2 versehen. Am ersten Abschnitt 31, welcher in einer Wandung des Gehäuses 23 drehbar gelagert ist, ist eine Nase 4.1 vorgesehen, der mit einer ringförmigen Nut 4.2 des Gehäuses 23 korrespondiert. Diese Nut 4.2 ist nicht über 360° umlaufend ausgebildet, und bildet somit für die Nase 4.1 einen Anschlag. Zum Schutz des Maßstabes 1 begrenzt die Drehbegrenzung 4 die Drehbarkeit des Drehkörpers 3 insbesondere derart, dass der zweite Abschnitt 32 des Drehkörpers 3 ausschließlich in Drehlagen gebracht werden kann, die innerhalb eines Schwenkbereiches von +100° und -100° zur Senkrechten S der Oberfläche des abzutastenden Maßstabs 1 liegen. Diese Senkrechte S ist auch die Senkrechte zu der das Abtastfenster 24 aufweisende Außenfläche 231 des Gehäuses 23.

Die vom Anwender für die aktuelle Anbausituation optimal gewählte Drehlage des Drehkörpers 3 kann mittels eines Sperrelementes 5 in der eingestellten Drehlage am Gehäuse 23 arretiert werden. Ein besonders platzsparendes Sperrelement 5 ist in Figur 6 dargestellt. Es besteht aus einer in die Wandung des Gehäuses 23 quer zur Drehachse M des Drehkörpers 3 eingeschraubte Schraube, welche den Drehkörper 3 klemmend ortsfest am Gehäuse 23 fixiert.

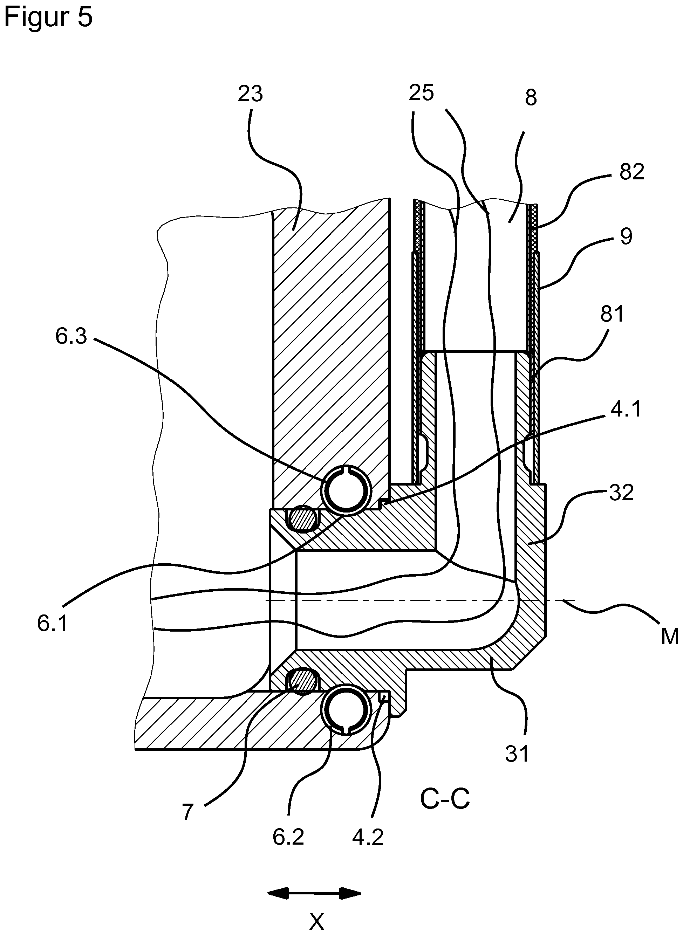

Wie in der Figur 5 dargestellt ist, erfolgt die drehbare Lagerung des Drehkörpers 3 am Gehäuse 23 durch eine in dem ersten Abschnitt 31 des Drehkörpers 3 eingebrachte umlaufende Nut 6.1, die mit quer zur Drehachse M verlaufenden Stiften 6.2, 6.3 kooperiert. Diese Stifte 6.2, 6.3 sind in der quer zur Messrichtung X verlaufenden Wandung des Gehäuses 23 eingebracht und sind in vorteilhafter Weise als Spannstifte ausgeführt. Die Nut 6.1 in Verbindung mit den Stiften 6.2, 6.3 haben auch die Funktion einer Auszugsicherung, indem sie den Drehkörper 3 axial am Gehäuse 23 formschlüssig fixieren.

Zwischen dem Drehkörper 3 und dem Gehäuse 23 ist eine Dichtung vorgesehen. Wie in den Schnittdarstellungen Figur 5 und Figur 6 dargestellt ist, wird diese Dichtung von einem Dichtring 7 in Form eines O-Rings gebildet, der radial zwischen einer runden Außenkontur des ersten Abschnitts 31 des Drehkörpers 3 und einer runden Innenkontur des Gehäuses 23 angeordnet ist. Der Dichtring 7 ist bezüglich des von außen betätigbaren Sperrelementes 5 innenraumseitig angeordnet. Das heißt, dass der Dichtring 7 axial gesehen zwischen dem Innenraum des Gehäuses 23 und dem Sperrelement 5 angeordnet ist. Diese Anordnung gewährleistet eine sichere Abdichtung des Innenraumes, da das Sperrelement 5, beispielsweise ausgeführt in Form der radial eingeschraubten Schraube, und die Stifte 6.2, 6.3 vom Innenraum aus gesehen nach dem Dichtring 7 platziert sind.

Der zweite Abschnitt 32 des Drehkörpers 3 kann endseitig mit einer Steckvorrichtung zum Anschluss an die elektrischen Leitungen 25 versehen sein oder mit einem Kabel 8. Besonders platzsparend ist die Fortführung der Leitungen 25 mittels eines Kabels 8, wie in Figur 5 dargestellt. Dabei sind die im Drehkörper 3 geführten elektrischen Leitungen 25 die Litzen des Kabels 8. Das Kabel 8 weist einen Schirm 81 auf, der elektrisch leitend mit dem zweiten Abschnitt 32 des Drehkörpers verbunden ist. Der Schirm 81 ist vorzugsweise ein Schirmgeflecht, das über den Außenumfang des rohrförmigen zweiten Abschnitts 32 des Drehkörpers 3 gelegt ist. Die Fixierung des Schirms 81 am Drehkörper 3 erfolgt durch eine Crimphülse 9. Diese Crimphülse 9 umschließt zusätzlich einen äußeren Mantel 82 des Kabels 8 und fixiert somit den Mantel 82 und somit auch das Kabel 8 am Drehkörper 3. Der umlaufende Crimpbereich, an dem die Crimphülse 9 den Mantel 82 des Kabels 8 klemmt wirkt auch als Abdichtung zwischen dem Kabel 8 und dem Drehkörper 3. Indem der Drehkörper 3 mit dem Gehäuse 23 in Kontakt steht ist auch gewährleistet, dass das Gehäuse 23 mit dem Schirm 81 des Kabels elektrisch verbunden ist.

Bei dem oben erläuterten Ausführungsbeispiel beruht die Positionsmessung auf dem lichtelektrischen Abtastprinzip. Die Erfindung ist aber auch bei anderen physikalischen Abtastprinzipien einsetzbar, wie z. B. magnetisch, kapazitiv oder induktiv. Weiterhin kann die Messteilung alternativ oder zusätzlich eine absolute Codierung umfassen.

## Patentansprüche

1. Abtasteinheit, ausgebildet zur Abtastung einer Messteilung (11) eines Maßstabes (1) zur Positionsmessung in einer Messrichtung (X), umfassend:
ein Gehäuse (23) mit einem Detektor (22) zur Generierung von positionsabhängigen Abtastsignalen;
eine elektrische Leitung (25), welche durch das Gehäuse (23) in Messrichtung (X) verlaufend nach außen geführt ist,
**dadurch gekennzeichnet, dass**
die elektrische Leitung (25) in einem Drehkörper (3) geführt ist, wobei der Drehkörper (3) einen ersten rohrförmigen Abschnitt (31) aufweist, der geradlinig in Messrichtung (X) verläuft und einen zweiten Abschnitt (32) aufweist, der in einer zweiten Richtung verläuft, die gegenüber der Messrichtung (X) abgewinkelt verläuft, und dass
der erste Abschnitt (31) des Drehkörpers (3) um eine Drehachse (M) in einer Öffnung des Gehäuses (23) drehbar gelagert ist, die in Messrichtung (X) verläuft, wobei die drehbare Lagerung des Drehkörpers (3) durch eine in dem ersten Abschnitt (31) des Drehkörpers (3) eingebrachte umlaufende Nut (6.1) erfolgt, die mit quer zur Drehachse (M) verlaufenden Stiften (6.2, 6.3) kooperiert, die in einer quer zur Messrichtung (X) verlaufenden Wandung des Gehäuses (23) eigebracht sind, und wobei die Nut (6.1) in Verbindung mit den Stiften (6.2, 6.3) eine axiale Auszugsicherung (6) zwischen dem Gehäuse (23) und dem Drehkörper (3) bilden, und dass
der Drehkörper (3) mittels eines Sperrelementes (5) in einer eingestellten Drehlage am Gehäuse (23) arretierbar ist, wobei das Sperrelement (5) eine in die Wandung des Gehäuses (23) quer zur Drehachse (M) des Drehkörpers (3) eingeschraubte und von außen betätigbare Schraube ist, welche den Drehkörper (3) klemmend ortsfest am Gehäuse (23) fixiert.

2. Abtasteinheit nach Anspruch 1, **dadurch gekennzeichnet, dass** der zweite Abschnitt (32) des Drehkörpers (3) gegenüber dem ersten Abschnitt (32) um 90° abgewinkelt verläuft.

3. Abtasteinheit nach einem der vorhergehenden Ansprüche, **dadurch gekennzeichnet, dass** zumindest zwei in Messrichtung (X) und parallel zueinander gegenüber liegende Außenflächen (233, 234) des Gehäuses (23) als Anbauflächen ausgebildet sind, und dass der zweite Abschnitt (32) des Drehkörpers (3) durch Drehen um die Drehachse (M) in zumindest zwei Drehlagen gebracht werden kann, wobei er in der ersten Drehlage von einer dieser zwei Außenflächen (233) in einem rechten Winkel weg weist und in der zweiten Drehlage von der anderen der beiden Außenflächen (234) in einem rechten Winkel weg weist.

4. Abtasteinheit nach Anspruch 3, **dadurch gekennzeichnet, dass** die Außenflächen (233, 234) des Gehäuses (23) als Anbaufläche zum Anbau an ein zu messendes Objekt ausgebildet sind, indem jeweils senkrecht zu diesen Außenflächen (233, 234) verlaufende Befestigungsbohrungen (26) eingebracht sind.

5. Abtasteinheit nach einem der vorhergehenden Ansprüche, **dadurch gekennzeichnet, dass** die Außenkontur des Gehäuses (23) quaderförmig ist.

6. Abtasteinheit nach einem der vorhergehenden Ansprüche, **dadurch gekennzeichnet, dass** zur Einschränkung des Drehwinkels des Drehkörpers (3) gegenüber dem Gehäuse (23) eine Drehbegrenzung (4) vorgesehen ist.

7. Abtasteinheit nach Anspruch 6, **dadurch gekennzeichnet, dass** die Drehbegrenzung (4) die Drehbarkeit des Drehkörpers (3) derart begrenzt, dass der zweite Abschnitt (32) des Drehkörpers (3) ausschließlich in Drehlagen gebracht werden kann, die innerhalb eines Schwenkbereiches von ± 100° zur Senkrechten (S) der Oberfläche des abzutastenden Maßstabs (1) liegen.

8. Abtasteinheit nach einem der vorhergehenden Ansprüche, **dadurch gekennzeichnet, dass** der in der Öffnung des Gehäuses (23) drehbar gelagerte erste Abschnitt (31) des Drehkörpers (3) eine runde Außenkontur aufweist, die mittels eines Dichtringes (7) gegenüber einer runden Innenkontur des Gehäuses (23) abgedichtet ist.

9. Abtasteinheit nach Anspruch 8, **dadurch gekennzeichnet, dass** der Dichtring (7) vom Innenraum des Gehäuses (23) ausgehend vor dem Sperrelement (7) angeordnet ist.

10. Abtasteinheit nach einem der vorhergehenden Ansprüche, **dadurch gekennzeichnet, dass** ein Kabel (8) mit dem zweiten Abschnitt (32) des Drehkörpers (3) verbunden ist, und dass die im Drehkörper (3) geführte elektrische Leitung (25) Litzen dieses Kabels (8) sind.

11. Abtasteinheit nach Anspruch 10, **dadurch gekennzeichnet, dass** der Drehkörper (3) über eine Crimphülse (9) mit einem Schirm (81) des Kabels (8) elektrisch leitend verbunden ist, und dass diese Crimphülse (9) einen Mantel (82) dieses Kabels (8) umschließt und den Mantel (82) mit dem Drehkörper (3) lagefixiert.

12. Positionsmesseinrichtung mit einer Abtasteinheit nach einem der vorhergehenden Ansprüche und einem der Abtasteinheit (2) zugeordneten Maßstab (1), der zur Positionsmessung in Messrichtung (X) ausgebildet ist und sich in Messrichtung (X) erstreckt.

## Claims

1. Scanning unit, designed for scanning a measuring graduation (11) of a scale (1) for position measurement in a measuring direction (X), comprising:
a housing (23) having a detector (22) for generating position-dependent scanning signals;
an electric line (25) which, extending through the housing (23) in the measuring direction (X), is led to the outside,
**characterized in that**
the electric line (25) is guided in a rotary body (3), wherein the rotary body (3) has a first tubular section (31), which extends rectilinearly in the measuring direction (X), and has a second section (32), which extends in a second direction that extends at an angle with respect to the measuring direction (X), and **in that** the first section (31) of the rotary body (3) is mounted such that it can rotate about an axis of rotation (M) in an opening of the housing (23), said axis of rotation extending in the measuring direction (X) wherein the rotatable mounting of the rotary body (3) is carried out by a circumferential groove (6.1) introduced into the first section (31) of the rotary body (3), which groove cooperates with pins (6.2, 6.3) which extend transversely with respect to the axis of rotation (M) and which are introduced into a wall of the housing (23) that extends transversely with respect to the measuring direction (X), and wherein the groove (6.1), in conjunction with the pins (6.2, 6.3), forms an axial pull-out safeguard (6) between the housing (23) and the rotary body (3), and **in that**
the rotary body (3) can be locked in a set rotational position on the housing (23) by means of a blocking element (5), wherein the blocking element (5) is a screw that is screwed into the wall of the housing (23) transversely with respect to the axis of rotation (M) of the rotary body (3), and can be actuated from outside, which screw fixes the rotary body (3) in a clamping manner in a fixed location on the housing (23).

2. Scanning unit according to claim 1, **characterized in that** the second section (32) of the rotary body (3) extends so as to be angled by 90° with respect to the first section (32).

3. Scanning unit according to one of the preceding claims, **characterized in that** at least two outer surfaces (233, 234) of the housing (23), which are located opposite each other in the measuring direction (X) and in a manner parallel to each other, are formed as attachment surfaces, and **in that** the second section (32) of the rotational body (3) can be moved into at least two rotary positions by rotation about the axis of rotation (M), wherein, in the first rotational position, it points away from one of these two outer surfaces (233) at a right angle and, in the second rotational position, it points away from the other of the two outer surfaces (234) at a right angle.

4. Scanning unit according to Claim 3, **characterized in that** the outer surfaces (233, 234) of the housing (23) are formed as an attachment surface for attachment to an object to be measured, by fixing holes (26) each extending at right angles to these outer surfaces (233, 234) being introduced.

5. Scanning unit according to one of the preceding claims, **characterized in that** the outer contour of the housing (23) is cuboidal.

6. Scanning unit according to one of the preceding claims, **characterized in that** a rotation limit (4) is provided to restrict the rotational angle of the rotary body (3) with respect to the housing (23).

7. Scanning unit according to Claim 6, **characterized in that** the rotation limit (4) limits the ability of the rotary body (3) to be rotated in such a way that the second section (32) of the rotary body (3) can be moved exclusively into rotational positions which lie within a pivoting range of ±100° relative to the vertical (S) to the surface of the scale (1) to be scanned.

8. Scanning unit according to one of the preceding claims, **characterized in that** the first section (31) of the rotary body (3) that is rotatably mounted in the opening of the housing (23) has a round outer contour, which is sealed off with respect to a round inner contour of the housing (23) by means of a sealing ring (7) .

9. Scanning unit according to Claim 8, **characterized in that**, starting from the interior of the housing (23), the sealing ring (7) is arranged in front of the blocking element (7).

10. Scanning unit according to one of the preceding claims, **characterized in that** a cable (8) is connected to the second section (32) of the rotary body (3), and **in that** the electric line (25) guided in the rotary body (3) is strands of this cable (8).

11. Scanning unit according to Claim 10, **characterized in that** the rotary body (3) is electrically conductively connected to a screen (81) of the cable (8) via a crimp sleeve (9), and **in that** this crimp sleeve (9) encloses a sheath (82) of this cable (8) and fixes the sheath (82) to the rotary body (3) in a fixed position.

12. Position measuring device having a scanning unit according to one of the preceding claims and a scale (1) which is assigned to the scanning unit (2) and is designed for position measurement in the measuring direction (X) and extends in the measuring direction (X).

## Revendications

1. Unité de balayage conçue pour balayer une graduation (11) d'une échelle graduée (1) destinée à la mesure de position dans une direction de mesure (X), l'unité de balayage comprenant :
un boîtier (23) comportant un détecteur (22) destiné à générer des signaux de balayage dépendant de la position ;
une ligne électrique (25) guidée vers l'extérieur en s'étendant à travers le boîtier (23) dans la direction de mesure (X),
**caractérisée en ce que**
la ligne électrique (25) est guidée dans un corps rotatif (3), le corps rotatif (3) comportant une première partie tubulaire (31) qui s'étend de manière rectiligne dans la direction de mesure (X) et comportant une deuxième partie (32) qui s'étend dans une deuxième direction inclinée par rapport à la direction de mesure (X), et **en ce que**
la première partie (31) du corps rotatif (3) est montée à rotation sur un axe de rotation (M) dans une ouverture du boîtier (23) qui s'étend dans la direction de mesure (X), le montage à rotation du corps rotatif (3) étant effectué par le biais d'une rainure périphérique (6.1) qui est ménagée dans la première partie (31) du corps rotatif (3) et qui coopère avec des broches (6.2, 6.3) qui s'étendent transversalement à l'axe de rotation (M) et qui sont montées dans une paroi du boîtier (23), laquelle paroi s'étend transversalement à la direction de mesure (X), et la rainure (6.1) formant, en liaison avec les broches (6.2, 6.3), une protection anti-arrachement axial (6) entre le boîtier (23) et le corps rotatif (3), et **en ce que**
le corps rotatif (3) peut être bloqué au niveau du boîtier (23) au moyen d'un élément de blocage (5) dans une position en rotation réglée, l'élément de blocage (5) étant une vis qui est vissée dans la paroi du boîtier (23) transversalement à l'axe de rotation (M) du corps rotatif (3), qui peut être actionnée depuis l'extérieur et qui fixe le corps rotatif (3) au boîtier (23) de manière immobile par serrage.

2. Unité de balayage selon la revendication 1, **caractérisée en ce que** la deuxième partie (32) du corps rotatif (3) s'étend angulairement à 90° par rapport à la première partie (32).

3. Unité de balayage selon l'une des revendications précédentes, **caractérisée en ce qu'**au moins deux surfaces extérieures opposées (233, 234), s'étendant parallèles l'une à l'autre dans la direction de mesure (X), du boîtier (23) sont conçues comme des surfaces de montage, et **en ce que** la deuxième partie (32) du corps rotatif (3) peut être montée dans au moins deux positions en rotation par rotation sur l'axe de rotation (M), la deuxième partie pointant, dans la première position en rotation, à angle droit à l'opposé de l'une de ces deux surfaces extérieures (233) et, dans la deuxième position en rotation, à angle droit à l'opposé de l'autre des deux surfaces extérieures (234) .

4. Unité de balayage selon la revendication 3, **caractérisée en ce que** les surfaces extérieures (233, 234) du boîtier (23) sont conçues comme une surface de montage destinée à être montée sur un objet à mesurer, des trous de fixation (26) étant pour cela ménagés perpendiculairement à chacune de ces surfaces extérieures (233, 234).

5. Unité de balayage selon l'une des revendications précédentes, **caractérisée en ce que** le contour extérieur du boîtier (23) est parallélépipédique.

6. Unité de balayage selon l'une des revendications précédentes, **caractérisée en ce qu'**une limitation en rotation (4) est prévue pour limiter l'angle de rotation du corps rotatif (3) par rapport au boîtier (23) .

7. Unité de balayage selon la revendication 6, **caractérisée en ce que** la limitation en rotation (4) limite la capacité de rotation du corps rotatif (3) de sorte que la deuxième partie (32) du corps rotatif (3) peut être amenée exclusivement dans des positions en rotation qui se trouvent dans une plage de pivotement de ± 100° par rapport à la verticale (S) de la surface de l'échelle graduée (1) à balayer.

8. Unité de balayage selon l'une des revendications précédentes, **caractérisée en ce que** la première partie (31) du corps rotatif (3), qui est montée à rotation dans l'ouverture du boîtier (23), présente un contour extérieur arrondi qui est rendu étanche par rapport à un contour intérieur arrondi du boîtier (23) au moyen d'une bague d'étanchéité (7).

9. Unité de balayage selon la revendication 8, **caractérisée en ce que** la bague d'étanchéité (7) est disposée à l'avant de l'élément de blocage (7) à partir de l'espace intérieur du boîtier (23).

10. Unité de balayage se-Ion l'une des revendications précédentes, **caractérisée en ce qu'**un câble (8) est raccordé à la deuxième partie (32) du corps rotatif (3), et **en ce que** des torons de ce câble (8) constituent la ligne électrique (25) guidée dans le corps rotatif (3).

11. Unité de balayage selon la revendication 10, **caractérisée en ce que** le corps rotatif (3) est raccordé électriquement par un manchon de sertissage (9) à un blindage (81) du câble (8), et **en ce que** ce manchon de sertissage (9) renferme une gaine (82) de ce câble (8) et fixe en position la gaine (82) au corps rotatif (3).

12. Dispositif de mesure de position comprenant une unité de balayage selon l'une des revendications précédentes et une échelle graduée (1) qui est associée à l'unité de balayage (2), qui est conçue pour la mesure de position dans la direction de mesure (X) et qui s'étend dans la direction de mesure (X).
